# EUROPÄISCHE PATENTSCHRIFT

(11) **EP 0 815 370 B1**
(45) Veröffentlichungstag und Bekanntmachung des Hinweises auf die Patenterteilung: **30.06.1999**
(21) Anmeldenummer: 96906723.0
(22) Anmeldetag: 01.03.1996
(51) Int. Cl.: F16H 21/36, F01B 1/08

(54) **HYPOZYKLOIDISCHES KURBELGETRIEBE FÜR HUBKOLBENMASCHINEN, INSBESONDERE FÜR BRENNKRAFTMASCHINEN MIT GEGENÜBERLIEGENDEN ZYLINDERREIHEN**
HYPOCYCLOIDAL CRANK MECHANISM FOR PISTON ENGINES, ENGINES ESPECIALLY FOR OPPOSED-CYLINDER INTERNAL COMBUSTION ENGINES
TRANSMISSION A MANIVELLE HYPOCYCLOIDALE POUR MACHINES A PISTONS A MOUVEMENT ALTERNATIF, EN PARTICULIER LES MOTEURS A COMBUSTION INTERNE AYANT DES RANGEES DE CYLINDRES OPPOSEES

(30) Priorität: 14.03.1995 DE 19509155
(43) Veröffentlichungstag der Anmeldung: 07.01.1998
(73) Patentinhaber: Bayerische Motoren Werke Aktiengesellschaft, 80788 München (DE)
(72) Erfinder: FISCHER, Gert, D-82340 Feldafing (DE)
(74) Vertreter: Bücken, Helmut
(86) Internationale Anmeldenummer: EP9600861
(87) Internationale Veröffentlichungsnummer: WO9628669

(56) Entgegenhaltungen:
- DE-A- 4 108 311
- GB-A- 2 246 411
- US-A- 3 285 503
- US-A- 3 791 227

## Beschreibung

Die Erfindung bezieht sich auf ein nach den Merkmalen des Oberbegriffes des Patentanspruches 1 gestaltetes hypozykloidisches Kurbelgetriebe für Hubkolbenmaschinen, insbesondere für Brennkraftmaschinen mit gegenüberliegenden Zylinderreihen. Für eine Brennkraftmaschine mit diametral angeordneten Zylinderpaaren wurde bereits ein derartiges Kurbelgetriebe vorgeschlagen (Deutsche Patentanmeldung 195 04 890.3 und am 22.8.1996 als WO-A-96-25587 veröffentlicht), wobei zur größtmöglichen Vereinfachung des hypozykloidischen Kurbelgetriebes bzw. des Hubtriebwerkes für zwei in einer Ebene gleichsinnig oszillierende, an beiden Enden Kolben tragende Kolbenstangen zwischen diesen eine einzige, orthogonal gerichtete Geradführung vorgesehen ist. Diese Geradführung umfaßt einen einzigen, zwischen kolbenstangenseitigen Hub-Exzentern angeordneten Führungs-Exzenter, der mit einem maschinengehäuseseitig geführten Gerad-Führungselement zusammenwirkt.

Gemäß einem ersten Beispiel der Geradführung ist als Führungselement ein Wattscher Lenker vorgesehen mit einer einteilig ausgebildeten Koppel, in deren umfänglich geschlossene Lager-Durchbrechung ein aus axial hälftigen Abschnitten gebauter Führungs-Exzenter angeordnet ist. In einem weiteren Beispiel der Geradführung ist als Führungselement ein in der Ebene der Achse der Lager-Durchbrechung hälftig geteilter Kulissenstein vorgesehen, der mit einem einteiligen, mit Ausgleichsmassen einstückig verbundenen Führungs-Exzenter zusammenwirkt. Bei beiden Ausführungsbeispielen ist die jeweils aus 3 Exzentern bestehende mehrteilige Kombination mittels zusätzlicher Elemente zu einer Baueinheit zu vereinen.

Der Erfindung liegt die Aufgabe zugrunde, das gattungsgemäße hypozykloidische Kurbelgetriebe derart zu verbessern, daß eine gebaute 3-Exzenter-Kombination vermieden ist und ein jeweiliges Gerad-Führungselement trotzdem mit einer umfänglich geschlossenen Lager-Durchbrechung auf dem Führungs-Exzenter anordbar ist.

Diese Aufgabe ist mit dem Patentanspruch 1 gelöst und zwar derart, daß die drei Exzenter ein einstückiges Bauteil bilden mit zumindest einer zwischen einem Hub-Exzenter und dem benachbarten Führungs-Exzenter vorgesehenen Verbindungsschulter von solcher Erstreckung in Hubzapfenrichtung, daß das Führungselement mit umfänglich geschlossener Lagerdurchbrechung über den schulterseitigen Hub-Exzenter hinweggeführt im Bereich der Verbindungsschulter quer zum Führungs-Exzenter hin verlagerbar ist zur drehbeweglichen Positionierung des Führungselementes auf dem Führungs-Exzenter.

Der Vorteil der Erfindung ist eine einstückige 3-Exzenter-Kombination von insbesondere hoher Festigkeit und Betriebssicherheit, gepaart mit einem eine umfänglich geschlossene Durchbrechung aufweisenden Gerad-Führungselement von hoher Belastbarkeit, wobei die Paarung der Kurbelgetriebeteile sich durch eine einfache Montage auszeichnet mit einer ersten Geradbewegung über einen Hub-Exzenter hinweg, eine anschließende Querbewegung im Bereich der Verbindungsschulter zum Führungs-Exzenter und schließlich einer weiteren Geradbewegung in Richtung des Führungsexzenters, womit das Gerad-Führungselement auf diesem aufgefädelt ist.

Die Erfindung ermöglicht bei einer einzigen, entsprechend lang gestalteten Verbindungsschulter zwischen einem Hub-Exzenter und dem Führungs-Exzenter die Anordnung einteilig gestalteter Gerad-Führungselemente, wie z.B. die Koppel eines Wattschen Lenkers, eines Kulissensteines oder eines Wälzlagers mit einem der Führung dienenden äußeren Laufring.

Zur Erzielung einer symetrischen Belastung des Kurbelgetriebes steht der Führungs-Exzenter in vorteilhafter Ausgestaltung der Erfindung mit jedem Hub-Exzenter über eine Verbindungsschulter in einstückiger Verbindung, wobei das Führungselement erfindungsgemäß aus auf die Erstreckungen der Verbindungsschultern abgestellt bemessenen, quer zur Achse der Lager-Durchbrechung unterteilten Teilen besteht.

Die vorbeschriebene erfindungsgemäße Ausbildung des einstückigen 3-Exzenter-Bauteiles läßt sich unter Einbeziehung der erfindungsgemäß gestalteten Verbindungsschultern vorteilhaft hinterschnittfrei gestalten, so daß eine auf die jeweilige Belastung abgestellte kostengünstige Fertigung des 3-Exzenter-Bauteiles als Schwer-, Bunt- oder Leichtmetallgußteil oder als Sinterteil vorteilhaft erzielbar ist.

Die oben beschriebene, erfindungsgemäße Teilung des Führungselementes quer zur umfänglich geschlossenen Lager-Durchbrechung für den Führungs-Exzenter ist besonders vorteilhaft anwendbar für eine Koppel eines Wattschen Lenkers. Anstelle einer massiven Ausbildung der Koppel kann diese unter Beachtung realer Belastungen aus zwei relativ dünnwandigen und damit besonders leichten Teilen gestaltet werden, wobei diese ihre erforderliche Festigkeit aus einer schalenartigen Gestaltung erhalten.

Vorzugsweise ist die zweiteilig gestaltete Koppel aus gleichen Teilen gebildet, wobei ein zweites Teil durch Umschlag eines ersten Teiles um eine Körperachse erzielt ist. Mit dieser Gleich-Teil-Gestaltung von aus einem einzigen Werkzeug hergestellten Teilen verbindet sich eine vorteilhafte Herstellung als Blechpreßteil, es ist aber auch eine Ausbildung als Feingußteil oder als Leichtmetall-Druckgußteil oder als Sinterteil möglich.

Für einen Wattschen Lenker in einem hypozykloidischen Kurbelgetriebe mit massiv ausgeführter Koppel ist es bekannt, die Schwingarme in gabelartigen Endabschnitten der Koppel zu lagern. Bei einer aus zwei Gleich-Teilen gestalteten Koppel können unter Beibehaltung der vorbeschriebenen Anlenkungsart der Schwingarme die Koppel-Teile axial beabstandet sein, wodurch ihre Abmessungen in Hubzapfenrichtung gegenüber einer hälftigen Ausgestaltung geringer sind und dementsprechend in vorteilhafter Weise die Verbindungsschultern von entsprechend kürzerer Erstreckung sind. Dies führt einerseits zu einem biegesteifen 3-Exzenter-Bauteil und ergibt andererseits eine freiere Wahl im Abstand parallel benachbarter Zylinder. Der axiale Abstand zweier Koppel-Teile kann vorzugsweise über einen umlaufenden Bund am Außenumfang einer zweiteiligen, zwischen Führungs-Exzenter und den Führungs-Lageraugen der Koppelteile angeordneten Gleitlagerschale bestimmt sein. Zusätzlich hilfreich zur Sicherung des Axialabstandes ist die Anordnung der Koppel-Teile auf der Gleitlagerschale über die Führungs-Lageraugen mittels Pressitz, wobei in den Anlenkbuchsen der Koppel-Teile angeordnete Lagerbolzen insbesondere einer Drehsicherung der Koppel-Teile relativ zueinander dienen.

Die Koppel-Teile können außer mit einer gemeinsamen Gleitlagerschale auch über gesonderte Gleitlagerringe mit dem Führungs-Exzenter drehbeweglich zusammenwirken. Weiter sind ein gemeinsames Wälzlager für beide Koppel-Teile vorstellbar, aber auch für jedes Koppel-Teil ein gesondertes Wälzlager.

Die Erfindung ist anhand eines in der Zeichnung dargestellten Ausführungsbeispiels beschrieben. Es zeigt
- Figur 1: in Explosionsdarstellung den erfindungsgemäß gestalteten Teil eines hypozykloidischen Kurbelgetriebes einer Hubkolben-Brennkraftmaschine,
- Figur 2: in perspektivischer Explosionsdarstellung den Teil des Kurbelgetriebes nach Figur 1 teilweise montiert und
- Figur 3: in perspektivischer Darstellung den Kurbelgetriebeteil fertig montiert.

In einem hypozykloidischen Kurbelgetriebe 1 einer nicht gezeigten Hubkolben-Brennkraftmaschine mit gegenüberliegenden Zylinderreihen, deren paarweise angeordnete Zylinder mit ihren Achsen orthogonal zur Kurbelwellenachse 2 gerichtet sind, ist mit 3 eine lediglich durch einen Linienzug veranschaulichte Kurbelwelle belegt.

Auf dem durch einen Linienzug 4 veranschaulichten Hubzapfen der Kurbelwelle 3 sind drei Exzenter 5, 5' und 6 drehbeweglich angeordnet mit einem Führungs-Exzenter 6 und zwei zu diesem diametral ausgerichteten Hub-Exzentern 5, 5' für gleichsinnig oszillierend gesteuerte (nicht gezeigte) Kolbenstangen. Der Führungs-Exzenter 6 wirkt mit einem Gerad-Führungselement 7 einer zur Hubrichtung der Kolbenstangen orthogonalen Geradführung zusammen, wobei das Gerad-Führungselement 7 den Führungs-Exzenter 6 in einer Lager-Durchbrechung 8 aufnimmt.

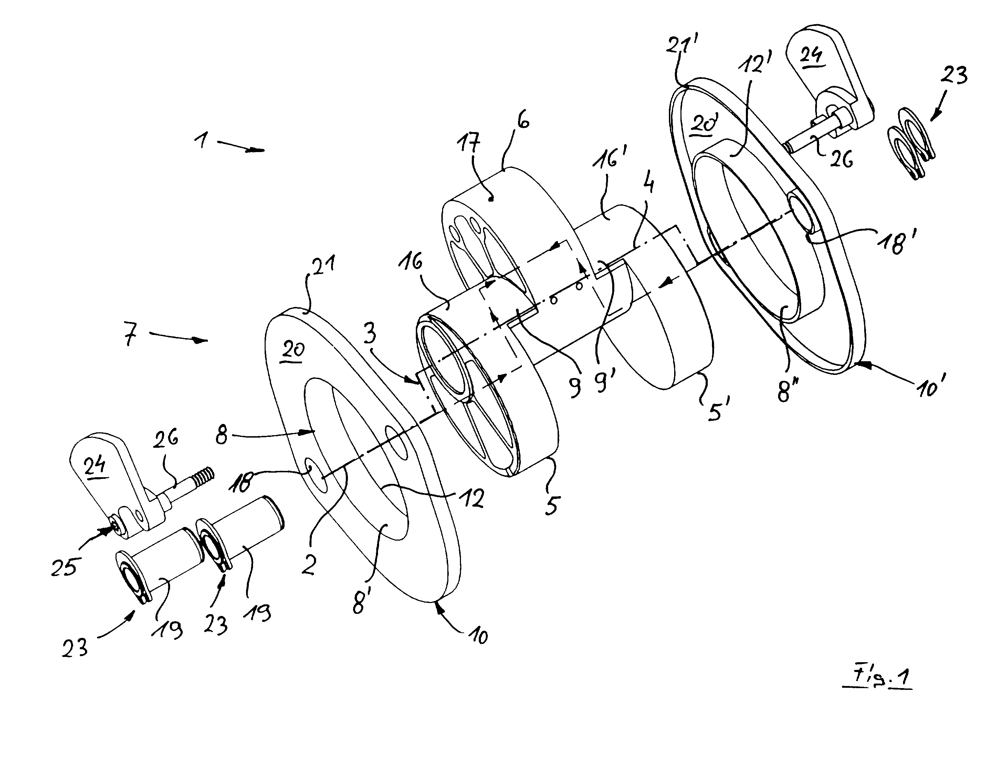

Erfindungsgemäß bilden die Hub-Exzenter 5 und 5' und der Führungs-Exzenter 6 ein einstückiges Bauteil mit der Maßgabe, daß zwischen jedem Hub-Exzenter 5, 5' und dem benachbarten Führungs-Exzenter 6 jeweils eine Verbindungsschulter 9, 9' vorgesehen ist von jeweils solcher Erstreckung in Hubzapfenrichtung, daß Teile 10, 10' des quer zur Achse der Lager-Durchbrechung 8 unterteilten Gerad-Führungselemente 7 mit jeweils umfänglich geschlossener Durchbrechung 8', 8" auf dem Führungs-Exzenter 6 anordbar sind. Wie insbesondere in Figur 1 gezeigte Pfeile veranschaulichen, wird jedes Führungselement-Teil 10, 10' über den jeweiligen Hubzapfen 5, 5' hinweggeführt in den Bereich der jeweiligen Verbindungsschultern 9, 9' und in diesem Bereich anschließend quer zum Führungs-Exzenter 6 hin verlagert bis zum Fluchten der jeweiligen Durchbrechung 8', 8" mit dem Führungs-Exzenter 6 zur anschließenden Positionierung jedes Teil 10, 10' auf dem Führungs-Exzenter 6.

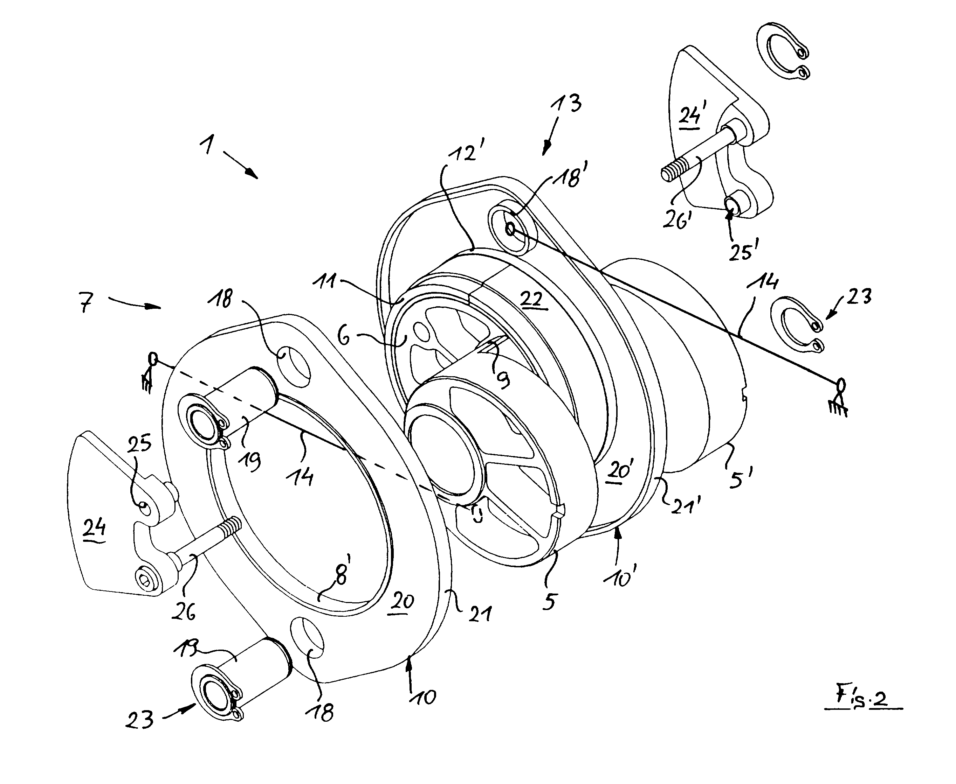

Bei im wesentlichen gleich großen Durchmessern der Exzenter 5, 5' und 6 wird zur Erleichterung der Montage der Gerad-Führungs-Teile 10, 10' in der vorbeschriebenen Weise die jeweilige Lager-Durchbrechung 8', 8" beispielsweise um die Abmessungen einer zweigeteilten Lagerschale 11 (Figur 2) zwischen dem Führungs-Exzenter 6 und den die Durchbrechungen 8', 8" begrenzenden Führungs-Lageraugen 12, 12' der Teile 10, 10' im Durchmesser größer gewählt. Eine andere Möglichkeit ist die Durchmesser der Hub-Exzenter 5, 5' gegenüber dem Durchmesser des Führungs-Exzenters 6 kleiner zu wählen.

Wie aus Figur 1 weiter ersichtlich, weist das erfindungsgemäß einstückige 3-Exzenter-Bauteil für eine mittige Anordnung des Führungs-Exzenters 6 zwischen den beiden Hub-Exzentern 5, 5' zur gleichmäßigen Belastung des lediglich teilweise dargestellten hypozykloidischen Kurbelgetriebes 1 gleichlange Verbindungsschultern 9, 9' auf. In einer Kombination dieses Kurbel getriebes 1 mit einem Wattschen Lenker 13 bildet dessen über Schwingarme 14 geradgeführte, aus den Teilen 10, 10' gebildete Koppel 15 das Gerad-Führungselement 7. Mit der Ausbildung der Koppel 15 aus zwei auf dem Führungs-Exzenter 6 axial beabstandeten Teilen 10, 10' ergibt sich die vorteilhafte Anlenkung der Schwingarme 14 zwischen diesen Teilen 10, 10'. Diese axial beabstandete Anordnung der Koppel-Teile 10, 10' ermöglicht in weiterer vorteilhafter Weise deren Abmessungen in Richtung des Führungs-Exzenters 6 kleiner zu wählen, was zusätzlich zu dem Vorteil relativ kurzer Verbindungsschultern 9, 9' führt.

Kurze Verbindungsschultern 9, 9' ergeben eine besonders steife einstückige 3-Exzenter-Baueinheit, wobei zur Steifigkeit der Querschnitt und die Oberflächengestaltung der Verbindungsschultern 9, 9' weiter dadurch beitragen, daß diese führungsexzenterseitig von entsprechenden zylindrischen Mantelflächen der Gleitlager 16 der Hub-Exzenter 5, 5' und hubexzenterseitig von einer entsprechenden zylindrischen Mantelfläche des Gleitlagers 17 des Führungs-Exzenters 6 begrenzt sind.

Wie aus Figur 1 auch erkennbar, ist das einstückige 3-Exzenter-Bauteil hinterschnittfrei gestaltet, wodurch eine vorteilhafte Ausbildung als Gußteil entsprechend der Belastung des Kurbelgetriebes 1 aus Schwer-, Bunt- oder Leichtmetall möglich ist. Auch eine Gestaltung als Sinterteil erscheint vorteilhaft.

Eine große Steifigkeit des einstückigen 3-Exzenter-Bauteils ergibt in Verbindung mit Koppel-Teilen 10, 10' mit umfänglich geschlossenen Durchbrechungen 8', 8" eine hohe Belastbarkeit des hypozykloidischen Kurbel getriebes 1. Diese umfänglich geschlossenen Lager-Durchbrechungen 8', 8" ermöglichen es , daß jedes Koppel-Teil 10, 10' in dünnwandiger Ausgestaltung eine die Führungs-Lageraugen 12, 12' und jeweils zwei diametral angeordnete Anlenkbuchsen 18, 18' für Lagerbolzen 19 der Schwingarme 14 vorzugsweise einstückig verbindende Tragwand 20, 20' umfaßt, die entlang ihrer Umfangskontur einen vorzugsweise einstückig angeordneten Versteifungsrand 21, 21' aufweist. Diese schalenartige Ausbildung ist geeignet, jedes Koppel-Teil 10, 10' als Blechpreßteil oder als Feingußteil oder als Leichtmetall-Druckgußteil oder auch als Sinterteil auszubilden. Mit der symetrischen Anordnung der Koppel-Teile 10, 10' auf dem Führungs-Exzenter 6 ergibt sich in Verbindung mit identischer Übereinstimmung in Form und Abmessungen der Vorteil, für die zweiteilige Koppel 15 des Wattschen Lenkers 13 die Teile 10 und 10' aus einem einzigen Werkzeug zu fertigen und somit den Vorteil einer Gleich-Teile-Konstruktion zu erzielen.

Zur Vermeidung einer aufwendigen Sicherung des Axialabstandes beider Koppel-Teile 10, 10' auf dem Führungs-Exzenter 6 ist die in die Führungs-Lageraugen 12, 12' eingreifende Gleitlagerschale 11 am Außenumfang mit einem umlaufenden Bund 22 als Anschlag für die Koppel-Teile 10, 10' ausgebildet. Die axiale Sicherung ist weiter dadurch unterstützt, daß auf der den Führungs-Exzenter 6 umschließenden, zweiteiligen Gleitlagerschale 11 die Koppel-Teile 10, 10' über die Führungs-Lageraugen 12, 12' mit Pressitz angeordnet sind. Schließlich dienen der Axialsicherung der Koppel-Teile 10, 10' in Richtung der Hub-Exzenter 5, 5' die in den Endabschnitten der Lagerbolzen 19 vorgesehenen Fixiermittel 23. Mit den jeweils diametrale Anlenkbuchsen 18, 18' der Koppel-Teile 10, 10' durchsetzenden, der koppelseitigen Anlenkung der Schwingarme 14 dienenden Lagerbolzen 19 ist weiter bei geringem Pressitz der Teile 10, 10' auf der Gleitlagerschale 11 eine Sicherung gegen relatives Drehen der Koppel-Teile 10, 10' erzielt.

Wie aus den Figuren ferner ersichtlich, sind am Führungs-Exzenter 6 einander gegenüberliegende Ausgleichsgewichte 24, 24' lösbar angeordnet, wobei die Ausgleichsgewichte 24, 24' abschnittsweise von der Tragwand 20, 20' jedes Koppel-Teiles 10, 10' derart axial beabstandet sind, daß die Ausgleichsgewichte 24, 24' frei an über die Tragwände 20, 20' vorstehenden Sicherungs-/Haltemitteln bzw. Fixiermitteln 23 der Lagerbolzen 19 vorbeidrehen. Weiter weisen die Ausgleichsgewichte 24, 24' jeweils ein Mutterngewinde 25, 25' auf und sind ferner jeweils mit einem Schraubbolzen 26, 26' ausgerüstet.

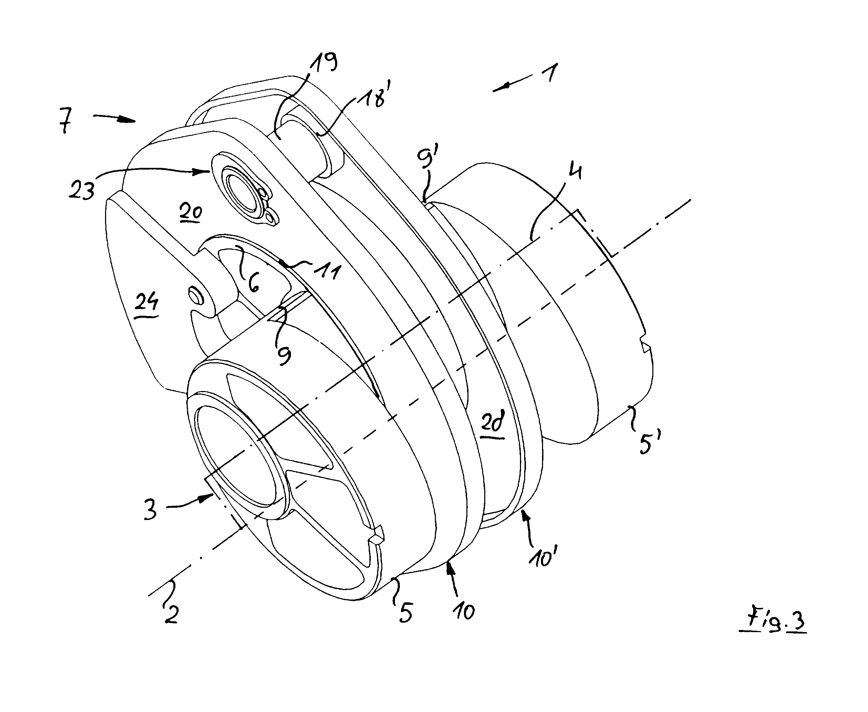

Im Rahmen der Erfindung können die in den Figuren 1 bis 3 nicht gezeigten Teile der Koppel 15 auf dem Führungs-Exzenter 6 miteinander zugewandten Führungs-Lageraugen bündig anschlagen, wobei in jedem Lagerauge ein Gleit- oder Wälzlager vorgesehen ist.

Bei einer erfindungsgemäß einstückigen 3-Exzenter-Baueinheit mit zwei Verbindungsschultern beiderseits des Führungs-Exzenters ist als Gerad-Führungselement auch ein quer zur Achse seiner Lager-Durchbrechung geteilter Kulissenstein denkbar. Anstelle des Kulissensteines können bei einer derartigen Drei-Exzenter-Einheit auch zwei Wälzlager vorgesehen werden, deren äußere Laufringe der Geradführung dienen.

Die erfindungsgemäß einstückige 3-Exzenter-Baueinheit kann aber auch mit nur einer Verbindungsschulter zwischen dem Führungs-Exzenter und einem der Hub-Exzenter ausgebildet sein, wodurch die Anordnung einer einteiligen Koppel eines Wattschen Lenkers oder die Anordnung eines einteiligen Kulissensteines oder die Anordnung eines breiten Wälzlagers möglich ist.

## Patentansprüche

1. Hypozykloidisches Kurbelgetriebe für Hubkolbenmaschinen, insbesondere für Brennkraftmaschinen mit gegenüberliegenden Zylinderreihen, mit folgenden Merkmalen:
- auf einem Hubzapfen (4) einer Kurbelwelle (3) sitzen drei ein einstückiges Bauteil bildende drehbeweglich angeordnete Exzenter (5,6,5'), von denen der mittlere ein Führungsexzenter (6) ist und die beiden benachbarten diametral zu dem Führungsexzenter ausgerichtete Hubexzenter (5, 5') sind, um Kolben- und/oder Führungsstangen gleichsinnig oszillierend zu steuern,
- der Führungsexzenter (6) ist in einer über ihren Umfang geschlossenen Lager-Aufnahme (8) eines Geradführungselementes (7) einer Geradführungsanordnung, welche senkrecht zur Hubrichtung der Kolben-/Führungsstangen angeordnet ist, drehbeweglich gelagert,
- das Exzenterbauteil weist zumindest zwischen einem der Hubexzenter (5 oder 5') und dem benachbarten Führungsexzenter (6) eine Verbindungsschulter (9,9') auf,
- die Lager-Aufnahme des Geradführungselementes (7) hat einen Durchmesser, der zumindest geringfügig größer ist als der Durchmesser des schulterseitigen Hubexzenters (5,5'), so daß das Geradführungselement (7) über diesen Hubexzenter hinwegführbar ist, und
- die Verbindungsschulter (9,9') hat eine Erstreckung derart, daß in ihrem Bereich das Geradführungselement (7) quer zum Führungsexzenter (6) verlagerbar ist, um es drehbeweglich auf dem Führungsexzenter (6) zu positionieren.

2. Kurbelgetriebe nach Anspruch 1, dadurch gekennzeichnet,
- daß der Führungs-Exzenter (6) mit jedem Hub-Exzenter (5, 5') über eine Verbindungsschulter (9, 9') in einstückiger Verbindung steht, und
- daß das Gerad-Führungselement (7) aus auf die Erstreckungen der Verbindungsschultern (9, 9') abgestellt bemessenen, quer zur Achse der Lager-Durchbrechung (8 bzw. 8', 8") unterteilten Teilen (10, 10') besteht.

3. Kurbelgetriebe nach den Ansprüchen 1 bis 2 , dadurch gekennzeichnet, daß die Verbindungsschultern (9, 9') des einstückigen 3-Exzenter-Bauteiles führungsexzenterseitig von entsprechenden zylindrischen Mantelflächen der Hub-Exzenter (5, 5') und hubexzenterseitig von einer entsprechenden zylindrischen Mantelfläche des Führungs-Exzenters (6) begrenzt sind.

4. Kurbelgetriebe nach den Ansprüchen 1 bis 3, dadurch gekennzeichnet, daß das einstückige 3-Exzenter-Bauteil hinterschnittfrei für ein Schwer-, Bunt- oder Leichtmetall-Gußteil oder ein Sinterteil ausgebildet ist.

5. Kurbelgetriebe nach den Ansprüchen 1 bis 4, dadurch gekennzeichnet,
- daß als Gerad-Führungselement (7) eine Koppel (15) eines Wattschen Lenkers (13) dient, und
- daß die Koppel (15) aus zwei senkrecht zur Achse der Lager-Durchbrechung (8 bzw. 8', 8") getrennten Teilen (10, 10') mit jeweils umfänglich geschlossener Durchbrechung (8', 8") besteht.

6. Kurbelgetriebe nach den Ansprüchen 1 bis 5, dadurch gekennzeichnet,
- daß jedes Koppel-Teil (10, 10') in dünnwandiger Ausgestaltung eine ein Führungs-Lagerauge (12, 12') und zwei diametral angeordnete Anlenkbuchsen (18, 18') für Lagerbolzen (19) von Schwingarmen (14) des Wattschen Lenkers (13) verbindende Tragwand (20, 20') umfaßt, die
- entlang ihrer Umfangskontur einen Versteifungsrand (21, 21') aufweist.

7. Kurbelgetriebe nach den Ansprüchen 1 bis 6, dadurch gekennzeichnet,
- daß die zweiteilige Koppel (15) aus gleichen Teilen (10, 10') gebildet ist, und
- jedes Gleich-Teil (10, 10') als Blechpreßteil oder als Feingußteil oder als Leichtmetall-Druckgußteil oder als Sinterteil ausgebildet ist.

8. Kurbelgetriebe nach den Ansprüchen 1 bis 7, dadurch gekennzeichnet,
- daß die Teile (10, 10') der Koppel (15) auf dem Führungs-Exzenter (6) axial beabstandet angeordnet sind, und
- dieser Axialabstand zwischen den Koppel-Teilen (10, 10') über einen am Außenumfang einer zweigeteilten Gleitlagerschale (11) umlaufenden Bund (22) bestimmt ist.

9. Kurbelgetriebe nach den Ansprüchen 1 bis 8, dadurch gekennzeichnet,
- daß auf der den Führungs-Exzenter (6) umschließenden Gleitlagerschale (11) die Koppel-Teile (10, 10') über die Führungs-Lageraugen (12, 12') mit Pressitz angeordnet sind, und
- daß die Koppel-Teile (10, 10') über die in den Anlenkbuchsen (18, 18') angeordneten Lagerbolzen (19) insbesondere relativ zueinander drehgesichert sind.

10. Kurbelgetriebe nach den Ansprüchen 1 bis 9, dadurch gekennzeichnet,
- daß mit dem Führungs-Exzenter (6) verbindbare Ausgleichsgewichte (24, 24') von der Tragwand (20, 20') jedes Koppel-Teiles (10, 10') derart axial beabstandet sind,
- daß die Ausgleichsgewichte (24, 24') frei an über die Tragwände (20, 20') vorstehenden Sicherungs-/Haltemitteln (23) der Lagerbolzen (19) vorbeidrehen.

11. Kurbelgetriebe nach den Ansprüchen 1 bis 10, dadurch gekennzeichnet, daß die am Führungs-Exzenter (6) einander gegenüber angeordneten Ausgleichsgewichte (24, 24') jeweils ein Einschraubgewinde (25, 25') aufweisen und mit einem Schraubbolzen (26, 26') ausgerüstet sind.

12. Kurbelgetriebe nach einem oder mehreren der Ansprüche 1 bis 11, dadurch gekennzeichnet,
- daß die Teile der Koppel (15) auf dem Führungs-Exzenter (6) miteinander zugewandten Führungs-Lageraugen bündig anschlagen und
- daß in jedem Lagerauge ein Gleit- oder ein Wälzlager vorgesehen ist.

13. Kurbelgetriebe nach den Ansprüchen 1 bis 4, dadurch gekennzeichnet, daß als Gerad-Führungselement ein einteiliger oder ein quer zur Achse der Lager-Durchbrechung geteilter Kulissenstein dient.

14. Kurbelgetriebe nach den Ansprüchen 1 bis 4, dadurch gekennzeichnet, daß als Gerad-Führungselement ein oder mehrere auf dem Führungs-Exzenter (6) angeordnete Wälzlager dienen.

## Claims

1. A hypocycloidal crank drive for reciprocating engines, especially internal combustion engines with facing rows of cylinders, having the following features:
- three eccentrics (5, 6, 5') movable in rotation and forming a one-piece component are disposed on a crank pin (4) of a crankshaft (3), the central eccentric being a guide eccentric (6) and the two neighbouring eccentrics being crank eccentrics (5, 5') aligned diametrically relative to the guide eccentric in order to control piston rods and/or guide rods so that they reciprocate in the same direction,
- the guide eccentric (6) is mounted so as to be movable in rotation in a peripherally closed bearing recess (8) of a straight guide element (7) of a straight guide arrangement disposed at right angles to the direction of reciprocation of the piston or guide rods,
- the eccentric component has a connecting shoulder (9, 9') at least between one of the crank eccentrics (5 or 5') and the neighbouring guide eccentric (6),
- the bearing recess for the straight guide element (7) has a diameter at least slightly greater than the diameter of the crank eccentric (5, 5') on the same side as the shoulder, so that the straight guide element (7) can be moved over the crank eccentric, and
- the connecting shoulder (9, 9') has an extension such that in its neighbourhood the straight guide element (7) is movable transversely to the guide eccentric (6) in order to position it so as to be rotatable on the guide eccentric (6).

2. A crank drive according to claim 1, characterised in that
- the guide eccentric (6) is integrally connected via a connecting shoulder (9, 9') to each crank eccentric (5, 5'), and
- the straight guide element (7) comprises parts (10, 10') dimensioned so match the extension of the connecting shoulders (9, 9') and divided transversely to the axis of the bearing opening (8 or 8', 8").

3. A crank drive according to claim 1 or claim 2, characterised in that the connecting shoulders (9, 9') of the one-piece three-eccentric component are bounded on the guide-eccentric side by suitable cylindrical surfaces of the crank eccentrics (5, 5') whereas on the crank-eccentric side they are bounded by a corresponding cylindrical surface of the guide eccentric (6).

4. A crank drive according to claims 1 to 3, characterised in that the one-piece three-eccentric component is shaped without undercuts for a heavy-metal, non-ferrous metal or light-metal casting or a sintered part.

5. A crank drive according to any of claims 1 to 4, characterised in that
- the straight guide element (7) serves as a coupler (15) of a Watt connecting rod (13) and
- the coupler (15) comprises two parts (10, 10') divided at right angles to the axis of the bearing opening (8 or 8', 8") and each with a peripherally closed opening (8', 8").

6. A crank drive according to claims 1 to 5, characterised in that
- each coupling part (10, 10') is thin-walled and comprises a bearing wall (20, 20') which connects a guide bearing eye (12, 12') and two diametrically disposed pivoting sockets (18, 18') for bearing pins (19) of swing arms (14) of the Watt connecting rod (13),
- the wall having a reinforcing edge (21, 21') along its peripheral contour.

7. A crank drive according to claims 1 to 6, characterised in that
- the two-part coupler (15) is made up of similar parts (10, 10') and
- each similar part (10, 10') is in the form of a sheet-metal pressed part or a precision casting or a light-metal die casting or a sintered part.

8. A crank drive according to claims 1 to 7, characterised in that
- the parts (10, 10') of the coupler (15) are axially spaced apart on the guide eccentric (6) and
- the said axial spacing between the coupling parts (10, 10') is determined by a collar (22) extending around the outer periphery of a two-part plain bearing race (11).

9. A crank drive according to claims 1 to 8, characterised in that
- the coupling parts (10, 10') are force-fitted via the guide bearing eyes (12, 12') on to the plain bearing race (11) surrounding the guide eccentric (6), and
- the coupling parts (10, 10') are prevented from rotation, particularly relative to one another, by the bearing pins (19) disposed in the sockets (18, 18').

10. A crank drive according to claims 1 to 9, characterised in that
- compensating weights (24, 24') connectable to the guide eccentric (6) are axially spaced apart from the bearing wall (20, 20') of each coupling part (10, 10') in such a way that
- the compensating weights (24, 24') rotate freely past means (23) for securing or holding the bearing pins (19) and projecting beyond the walls (20, 20').

11. A crank drive according to claims 1 to 10, characterised in that the compensating weights (24, 24') disposed opposite one another on the guide eccentric (6) each have a screw thread (25, 25') and are provided with a screw bolt (26, 26').

12. A crank drive according to one or more of claims 1 to 11, characterised in that
- the parts of the coupler (15) on the guide eccentric (6) abut and are flush with facing guide bearing eyes and
- a plain bearing or a rolling bearing is provided in each bearing eye.

13. A crank drive according to claims 1 to 4, characterised in that the straight guide element is a sliding block, either in one piece or divided transversely to the axis of the bearing opening.

14. A crank drive according to claims 1 to 4, characterised in that the straight guide element is one or more rolling bearings disposed on the guide eccentric (6).

## Revendications

1. Transmission à vilebrequin hypocycloïdal pour un moteur à piston linéaire notamment pour un moteur à combustion interne à rangées de cylindres opposées,
caractérisée en ce qu'
elle comprend :
- sur un tourillon (4) d'un vilebrequin (3), il y a trois excentriques (5, 6, 5') mobiles en rotation et ne constituant qu'une seule pièce, parmi lesquels l'excentrique central est un excentrique de guidage (6) et les deux excentriques voisins, diamétralement opposés (5, 5') sont des excentriques de guidage pour commander suivant un mouvement oscillant de même sens le piston et/ou une tige de guidage,
- l'excentrique de guidage (6) est monté à rotation sur un oeillet de palier (8) à périphérie fermée d'un élément de guidage linéaire (7) d'un dispositif de guidage linéaire prévu perpendiculairement à la direction de déplacement des tiges de piston/tiges de guidage,
- la partie formant l'excentrique comporte au moins entre l'un des excentriques de translation (5 ou 5') et l'excentrique de guidage voisin (6), un épaulement de liaison (9, 9'),
- l'oeillet de palier de l'élément de guidage rectiligne (7) a un diamètre qui est au moins légèrement supérieur au diamètre de l'excentrique de translation (5, 5') du côté de l'épaulement pour que l'élément de guidage rectiligne (7) puisse être conduit par cet excentrique de guidage et,
- l'épaulement de liaison (9, 9') a une longueur telle pour qu'à son niveau, l'élément de guidage linéaire (7) puisse être déplacé transversalement à l'excentrique de guidage (6) pour le positionner mobile en rotation sur l'excentrique de guidage (6).

2. Transmission à vilebrequin selon la revendication 1,
caractérisée en ce que
- l'excentrique de guidage (6) fait une seule pièce avec l'excentrique de translation (5, 5') par l'intermédiaire d'un épaulement de liaison (9, 9') et,
- l'élément de guidage rectiligne (7) est dimensionné en fonction des extensions des épaulements de liaison (9, 9') et est formé de pièces (10, 10') subdivisées transversalement à l'axe du passage de palier (8, 8', 8").

3. Transmission à vilebrequin selon l'une des revendications 1 et 2,
caractérisée en ce que
les épaulements de liaison (9, 9') de la pièce unique à trois excentriques sont délimités du côté de l'excentrique de guidage par une surface enveloppe cylindre correspondante de l'excentrique de translation (5, 5') et du côté de l'excentrique de translation par une surface enveloppe cylindrique correspondante de l'excentrique de guidage (6).

4. Transmission à vilebrequin selon l'une des revendications 1 à 3,
caractérisée en ce que
la pièce unique à trois excentriques ne comporte pas de contre-dépouille pour permettre une réalisation comme pièce coulée en métal lourd, en métal mixte ou en métal léger ou encore comme pièce frittée.

5. Transmission à vilebrequin selon l'une des revendications 1 à 4,
caractérisée en ce que
- l'élément de guidage linéaire (7) est une bielle (15 ) d'un bras de watt (13), et
- la bielle (15) se compose de deux parties (10, 10') séparées perpendiculairement à l'axe du passage de palier (8, 8', 8") avec chaque fois un passage (8', 8") fermé de manière périphérique.

6. Transmission à vilebrequin selon l'une des revendications 1 à 5,
caractérisée en ce que
- chaque partie de bielle (10, 10') réalisée à paroi mince comporte une cloison de support (20, 20') ayant un oeillet de palier de guidage (12, 12') et deux douilles d'articulation (18, 18') diamétralement opposées pour recevoir des goujons de palier (19) de bras oscillants (14) du bras de watt (13),
- cette cloison ayant à sa périphérie une paroi de rigidification (21, 21').

7. Transmission à vilebrequin selon l'une des revendications 1 à 6,
caractérisée en ce que
- la bielle en deux parties (15) est formée de deux parties identiques (10, 10'), et
- chaque pièce identique (10, 10') est une pièce emboutie ou une pièce en fonte fine ou une pièce en métal léger injectée sous pression ou encore une pièce frittée.

8. Transmission à vilebrequin selon l'une des revendications 1 à 7,
caractérisée en ce que
- les parties (10, 10') de la bielle (15) sont montées distantes axialement sur l'excentrique de guidage (6) et,
- cette distance axiale entre les parties de la bielle (10, 10') est définie par une collerette périphérique (22) prévue à la périphérie extérieure d'un coussinet en deux parties (11).

9. Transmission à vilebrequin selon l'une des revendications 1 à 8,
caractérisée en ce que
- le coussinet (11) qui entoure l'excentrique de guidage (6) reçoit les parties de bielle (10, 10') par l'intermédiaire des oeillets de palier de guidage (12, 12') selon un montage en sièges ajustés et,
- les parties de bielle (10, 10') sont bloquées en rotation notamment l'une par rapport à l'autre par des goujons de palier (19) logés dans des douilles d'articulation (18, 18').

10. Transmission à vilebrequin selon l'une des revendications 1 à 9,
caractérisée en ce que
- des masses d'équilibrage (24, 24') susceptibles d'être reliées à l'excentrique de guidage (6) sont écartées axialement par la cloison de support (20, 20') de chaque partie de bielle (10, 10') pour que
- les masses d'équilibrage (24, 24') passent librement sur les moyens de fixation/blocage (23) des oeillets de palier (19) qui dépassent de la cloison de support (20, 20').

11. Transmission à vilebrequin selon l'une des revendications 1 à 10,
caractérisée en ce que
les masses d'équilibrage (24, 24') prévues de manière opposée sur l'excentrique de guidage (6) comportent chaque fois un taraudage (25, 25') et une vis (26, 26').

12. Transmission à vilebrequin selon l'une ou plusieurs des revendications 1 à 11,
caractérisée en ce que
- les parties de la bielle (15) viennent à fleur des oeillets de palier de guidage tournés l'un vers l'autre sur l'excentrique de guidage (6), et
- dans chaque oeillet de palier, il y a un coussinet ou un palier de roulement.

13. Transmission à vilebrequin selon l'une des revendications 1 à 4,
caractérisée en ce que
l'élément de guidage linéaire est un galet à coulisse en une partie ou divisé transversalement à l'axe du passage de palier.

14. Transmission à vilebrequin selon l'une des revendications 1 à 4,
caractérisée en ce que
l'élément de guidage linéaire est constitué par un ou plusieurs paliers de roulement montés sur l'excentrique de guidage (6).
